# EUROPEAN PATENT APPLICATION

(11) **EP 1 189 474 A1**
(43) Date of publication of application: **20.03.2002**
(21) Application number: 01660165.0
(22) Date of filing: 13.09.2001
(51) Int. Cl.: H04Q 7/38

(54) **Method and system for implementing Location-dependent services in a communications system**

(30) Priority: 18.09.2000 FI 20002050
(71) Applicant: Sonera Oyj, 00510 Helsinki (FI)
(72) Inventor: Taavitsainen, Mr. Jari, 90800 Oulu (FI); Karhu, Mr. Pekka, 90100 Oulu (FI)
(74) Representative: Honkanen, Jukka Samuli

(57) **Abstract**

The invention relates to provision of location-dependent services for mobile terminals in a communications system. For enabling location-dependent services to be implemented in an uncomplicated manner using the current technology, location information indicating the current location of the terminal is transferred in the data of a call attempt, the call attempt is routed to an Intelligent Network, and the location information is stored into a location database by means of the Intelligent Network during the setup phase of the call. The database is assigned to services available in the system, whereby a service can retrieve the location information during a call, which is the result of said call attempt.

## Description

### Field of the Invention

The invention relates generally to the provision of services in a mobile communications network. More specifically, the invention relates to a method and a system for implementing location-dependent services, i.e. services in which the current location of the mobile terminal is utilized in some way. An example of such a service is a service, which graphically displays the location of the mobile terminal within a cellular network.

### Background of the Invention

The strong growth in the number of Internet users and services provided through the Internet has been one of the most remarkable phenomena in communications in recent years. Another current trend is the strongly increasing use of various mobile terminals, such as laptops, PDA (Personal Digital Assistant) equipment, and intelligent telephones.

These two rapidly evolving network technologies, wireless communication and the Internet, are gradually converging to make the packet switched data services used in the Internet available to mobile users. Many of the future services will be such that they require information of the current geographical location of the mobile terminal within the network.

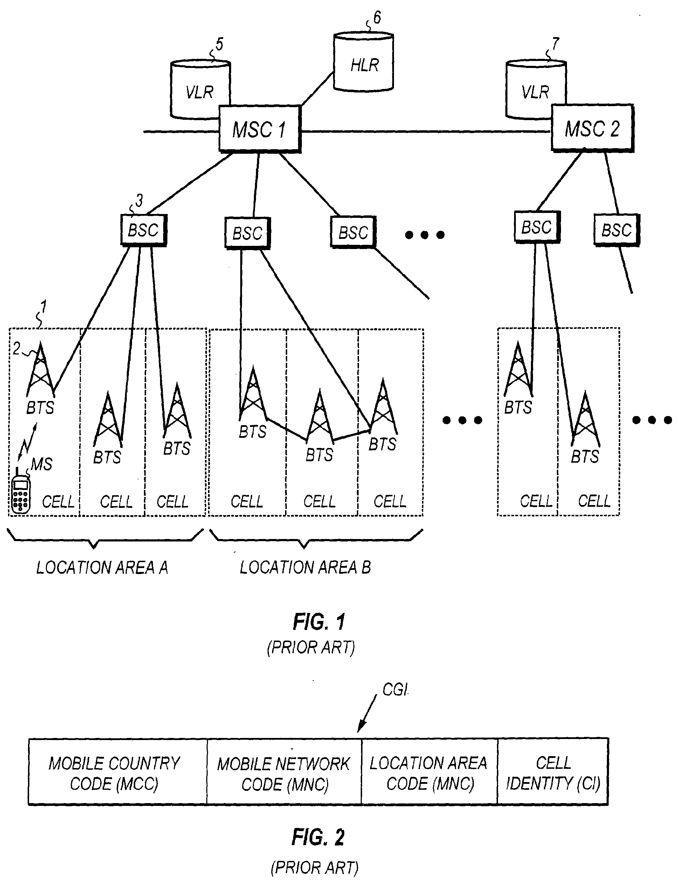

With reference to Figure 1, the structure of a mobile communication network and the mobility management performed in said network is first discussed briefly. The example of Figure 1 relates to the GSM Public Land Mobile Network, but other digital mobile communication networks include similar network elements. Communication between the network and a Mobile Station (MS) in a cell takes place via a radio path by way of a Base Transceiver Station (BTS). The Base Transceiver Stations are connected to a Base Station Controller (BSC). Several Base Transceiver Stations are usually under the control of one BSC and they can be chained to one another or cabled directly to the BSC, as is illustrated in the figure. The geographical area covered by these Base Transceiver Stations is called the Location Area (LA) and the calls intended for the Mobile Stations in this area are sent through these Base Transceiver Stations. A Mobile Station may move within the Location Area without the need to update the location data concerning the Mobile Station.

Several Base Station Controllers are connected to one Mobile Switching Centre (MSC), which carries out the main switching functions of the mobile communication network. In addition, it connects the mobile communication network with external networks. The entity of Location Areas under the management of the Mobile Switching Centre is called the Switching Centre Area. All calls beginning from and ending in the Switching Centre Area are relayed by way of the same Mobile Switching Centre. If the mobile communication network includes several MSCs, their Switching Centre Areas together form the system area of the mobile communication network, i.e. the geographical area covered by one network. The network is almost always operated by one organization (operator).

The mobile communication network further includes various databases. Subscriber data is stored permanently in a Home Location Register (HLR), irrespective of the current location of the subscriber. If the network is large and there are many subscribers, several HLRs are used. The number space is divided between these registers, whereby the search for subscriber data is quicker. A Visitor Location Register (VLR) is nowadays integrated with each MSC and the subscriber data fetched from the HLR is stored therein while the subscriber visits the area of the VLR, that is, the Switching Centre Area.

Location update is done every time the subscriber connects to the network. When a subscriber e.g. in cell 1, Figure 1, turns on his Mobile Station, it signals a location update request to BTS 2, and the request is directed by way of BSC 3 to MSC 1 and further to VLR 5. The register asks the subscriber to send his subscriber code, from which the VLR learns the subscriber's HLR. The VLR then asks the subscriber's HLR a to send the authentication parameters needed for the identification of the subscriber and for encrypting the connection. After a successful authentication of the subscriber, the subscriber's HLR knows that area of the VLR, that is, the Mobile Switching Centre, where the subscriber is located and it sends the subscriber data to the VLR in question. The subscriber's location is now updated, i.e. the subscriber's HLR knows the address of the visited VLR, and the visited VLR knows the Location Area wherein the mobile station is located.

Location update is also done every time a subscriber moves from one Location Area to another. This update is done on the mobile station's initiative, which informs the VLR about the changed Location Area. If the Location Area belongs to the same Switching Centre Area, that is, to the control of the same VLR, there is no need to change the address of the VLR which is stored in the subscriber's HLR. The address is changed only if the subscriber moves to another Switching Centre Area, whereby the VLR of the visited area tells its address to the HLR, and the HLR sends the subscriber data to said VLR.

Location update can also be made periodically at certain intervals (Periodic Location Update). Hereby the location update is triggered off when the timer in the mobile station expires.

As discussed above, the Location Area is the largest area where an MS can move without location update and it is also the area which the network pages in order to find a particular MS, i.e. the network knows the location of the MS with an accuracy of one Location Area. Location Area Identity (LAI) is used for identifying the LA in which the MS is currently residing. In addition to the LAI the system is provided with an identifier for an individual cell, called Cell Global Identity (CGI). The network uses this identity for distinguishing the neigbouring cells from each other, i.e. it is not used for indicating the current location of the MS. The structure of the CGI is shown in Figure 2. The CGI consists of the Mobile Country Code (MCC, the code for Finland is 244 for example), the Mobile Network Code (MNC, which is an operator-specific parameter), the Location Area Code (LAC), and the Cell Identity (Cl).

In ISUP (ISDN User Part) signaling, which is widely used in mobile networks, the BTS signals the CGI to the network when a connection is established between the mobile terminal and the network. As disclosed below, this feature is utilized in the present invention for implementing location-dependent services.

Determining the geographical position of a Mobile Station has recently become more important for a wide range of applications, as is discussed for example in U.S. Patent 6,088,594. The said patent describes a system for graphically displaying the current location of a mobile terminal. The system requires a terminal-based browser to connect the MS to a web-based location application. This application sends the positioning request arrived from the MS to a Mobile Positioning Center which then forwards the request to the Mobile Switching Center serving the Location Area containing the MS. After three or more BTSs have performed location measurements, the measurement data is forwarded to the Mobile Positioning Center where the location of the Mobile Station is determined using a triangulation algorithm. Thus, this system determines the location of the MS by means of measurements performed by three or more separate Base Transceiver Stations.

A major drawback of a system like the one described in U.S. Patent 6,088,594 is that it is rather complex, due to the many network elements and rather heavy signaling involved. Further, the system requires access to the MSC interface, which is likely to render the system vendor-specific so that it will be available only from the supplier of the Mobile Switching Center. It is also likely that the accuracy obtained by the triangulation algorithm is exaggerated for most location-dependent services and that an accuracy of one cell would be quite adequate for most services.

Despite the above-mentioned trend and the development work done so far, no location-dependent services are yet available on the market. Thus, for example users of WAP (Wireless Application Protocol) terminals have to wait for future versions, which will make these services available.

It is an objective of the invention to obtain a solution by means of which it is possible to eliminate the drawbacks described above and to bring about a solution enabling an uncomplicated implementation of location-dependent services using the current technology.

### Summary of the Invention

The objective of the invention is to accomplish a method and a system which enable location-dependent services to be implemented in a communications network in an uncomplicated manner using the current technology.

This objective is achieved with the solution defined in the independent patent claims.

The idea of the invention is to utilize an Intelligent Network (IN) so that a call attempt which is destined for a network element through which location-dependent services are available, is routed to the Intelligent Network where the location information contained in the call data is copied and stored into a database. When the location of the Mobile Station has been stored in the database, the processing of the call attempt is continued in a normal manner. In a preferred embodiment of the invention the database is further replicated and the replicated database, not the original, is assigned to the users of the network.

In this way the location of the MS can be updated in connection with each call (i.e. service session), using the technology currently available. When the user then begins to use a location-dependent service later during the same call, the service in question makes a query to the database to find out the current location of the MS.

A further advantage of the present invention is that it enables easy adaptation to the legislative requirement stipulating that storage of the location information a mobile terminal is allowed only during a service session (i.e. a call) of that terminal. This kind of stipulation may be valid in some countries.

### Brief Description of the Drawings

In the following, the invention and its preferred embodiments are described more closely referring to the examples shown in Figures 3 to 5 in the appended drawings, wherein:
Figure 1 illustrates a conventional mobile communication network,
Figure 2 illustrates the structure of the GCI parameter used in conventional mobile communication networks,
Figure 3 illustrates the provision of services in the known WAP environment,
Figure 4 illustrates the general architecture of the system according to the present invention, and
Figure 5 is a flow diagram depicting the operation of the Service Control Point when it receives a service request pointing to a location-dependent service.

### Detailed Description of the Invention

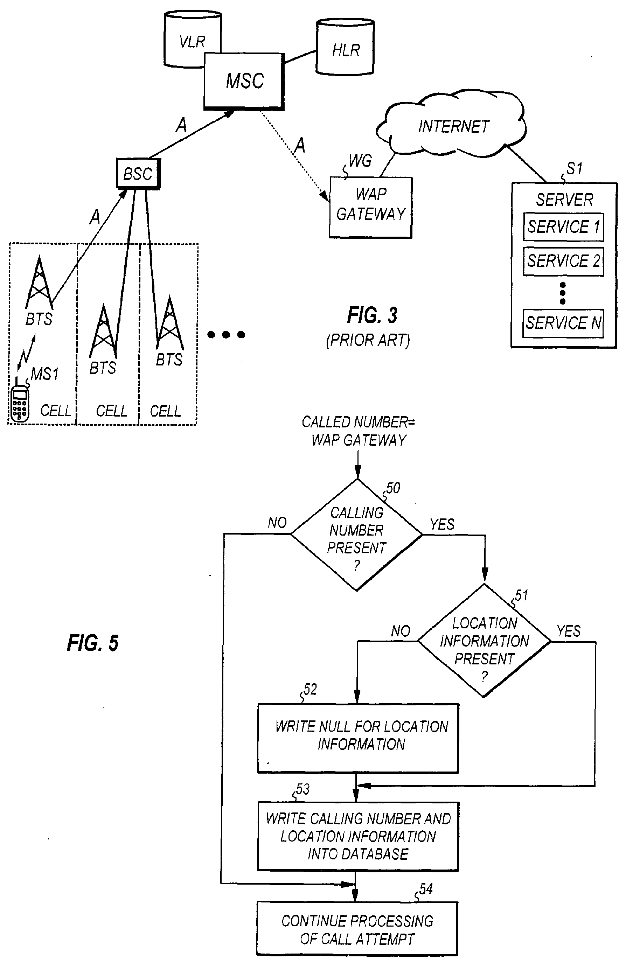

To elucidate the differences between the invention and the prior art, the conventional method of accessing services is first discussed briefly with reference to the example in Figure 3. The examples given below relate to WAP terminals for which the invention is particularly useful, since there are no location-dependent services available for WAP users currently. The invention, however, allows said services to be implemented with current technology.

In Figure 3, it is assumed that a user with a WAP-compliant terminal MS1 requests content from the network, for example from server S1, which is a node in the Internet. As is known, the WAP architecture includes a gateway (WG) including encoders and decoders. In order to reduce the size of data which is sent via a radio channel to the terminal, an encoder encodes the content received from a server into a compact encoded format. Accordingly, a decoder decodes the encoded data received from a radio channel before the data is forwarded to the server. The connections between the terminal and the gateway typically use WSP (Wireless Session Protocol), whereas the connections between the gateway and the server typically use HTTP. The gateway therefore performs translations from the WAP protocol stack (WSP, WTP, WTLS, and WDP) to the WWW protocol stack (HTTP and TCP/IP). The gateway can also perform content conversion. If the server provides WWW content (such as HTML), the gateway can translate the WWW content into WAP content (WML), and vice versa.

When the user with a WAP-compliant terminal MS1 requests content from the network, for example from server S1, the browser in the terminal connects to the operator-controlled gateway WG and sends a GET request with the address, i.e. the URL, of the desired service or resource. In response to the request, the gateway creates an HTTP session with the server concerned and sends a request for the content specified by the URL. The server processes the request and sends a reply to the gateway which then returns the encoded content to the terminal.

As is obvious from the above, when the user initiates the use of a service in a network environment according to Figure 3, the call attempt is routed from the MSC to the WAP gateway. Arrows A in Figure 3 illustrate the route of the call attempt. In the call establishment process, the MS sends a setup message to the mobile network. This message contains, in addition to other information, the dialed number, which corresponds to the operator-controlled WAP gateway. When the MSC receives this number in the setup information (i.e. in the call data), it knows that the call attempt must be routed to the WAP gateway. Depending on the network topology, there may be additional network elements between the MSC and the gateway.

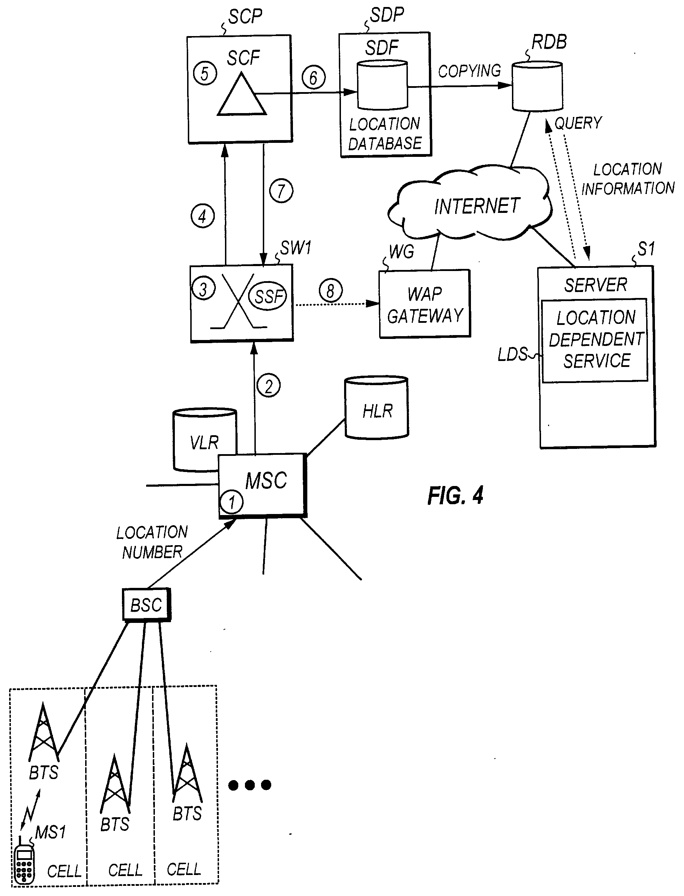

Signaling System No. 7 is widely used in various networks, for example in GSM PLMNs where the ISDN User Part (ISUP) of the SS7 protocol typically provides signaling functions. In the ISUP signaling, a parameter called "location number" has been determined. In present-day mobile networks, the above-mentioned Global Cell Identity is transferred in the location number field from the BTS to the MSC in the messages carrying the setup information during the call setup process. The system according to the present invention utilizes this feature in the way described below with reference to Figures 4 and 5. Figure 4 illustrates the implementation of location-dependent services, whereas Figure 5 illustrates the operation of the Service Control Point (SCP) shown in Figure 4. The network environment corresponds to that of Figure 3. Various steps of the method are marked with circled numbers 1 to 8 in Figure 4.

As mentioned above, in the present invention an Intelligent Network is utilized for implementing a location-dependent service. When a call is being established and the MSC receives the setup information including said location number field (Figure 4, step 1), it routes the call attempt towards the Intelligent Network, if the called number corresponds to the number of the WAP gateway (step 2). Thus, the call attempt is not routed directly to the WAP gateway WG but first to the Intelligent Network and only after that to the WAP gateway, as discussed below. The call is therefore first routed to an SSP (Service Switching Point) exchange SW1, capable of making IN service requests. When this exchange receives the call attempt (i.e. the call data), it it examines whether the called number corresponds to the number of the WAP gateway (step 3). If this is the case, a query is triggered from the SSP to the Intelligent Network and the processing of the call attempt is "frozen" in the SSP. The triggering condition is set up in the exchange in a manner known as such. The Service Switching Function (SSF) hereby transmits an Initial_DP message to a Service Control Function (SSF) at step 4, the message including relevant call data, such as the calling and called number and the location information. (Initial_DP is a message between the SSF and the SCF which is defined in the standards and which the SSF generates on detecting a service request in any Detection Point of the call model.)

When the Service Control Point (SCP, i.e. a network element with the Service Control Function) receives said Initial_DP message, it checks the called number (step 5). If the Service Control Point then detects that the called number corresponds to the number of the WAP gateway, it operates as shown in the flow chart of Figure 5. The Service Control Point first checks whether the calling number can be found in the call data (step 50 in Figure 5). If this is the case, it then checks whether the location information (i.e. the location number) can also be found in the call data (step 51). If both data can be found, which is the case in normal operation of the system, the Service Control Point jumps to step 53 to write the calling number and the corresponding location information into a centralized database in the Service Data Point (step 6 in Figure 4). If it is found at step 51 that the location information is not present in the call attempt data (i.e. in the setup information), the value of nil is first given to the location information (step 52) before proceeding to the step of updating the database (step 53).

After the calling number and the corresponding location information have been written into the database, the Service Control Point commands the Service Switching Point SSP to continue the processing of the call attempt in the normal manner (step 54 in Figure 5, step 7 in Figure 4). The process skips directly to this step, if it detects at step 50 that the call attempt data does not include the calling number.

The location information is transmitted to the Service Data Point using the protocol used between the SCP and the SDP, e.g. X.500. A different protocol is normally used between the SCP and the SDP than between SSP and SCP.

When commanding the Service Switching Point SW1 to continue the processing of the call attempt in the normal manner, the SCP sends the SSP a CONTINUE message according to standards, which means that the SSP may continue, in a normal manner, the processing of the call attempt which was stopped earlier. The SSP then routes the call attempt to the WAP gateway, as in the prior art routing method discussed in connection with Figure 3. The SCP may also return to the SSP a CONNECT message according to standards, with which a connection is established with the desired object or the call is rerouted to another object, which in this case could be another WAP gateway offering the same services as the gateway that was addressed by the calling party.

It is to be noted that in the prior art setup process shown in Figure 3 the call attempt may be routed through the same SSP exchange as in the method according to the present invention, if the direct route from the MSC to the gateway goes via said exchange. However, in the prior art setup process the Intelligent Network is not utilized in any way, but the SSP exchange operates as a normal transit exchange between the MSC and the gateway.

In a preferred embodiment of the invention, the location database in the SDP is further replicated to another database RDB, shown in Figure 4. This database is typically in a node of another network, such as the Internet. The replicated database is then given for the use of the location-dependent services. Using a replicated database the operator can keep the original database in its own network, which the users cannot access. The policy of the operators is typically such that no queries are allowed to the production equipment, and the replication thus enables this requirement to be fulfilled.

After the call attempt has been routed to the WAP gateway and the connection has been established, the user can start using the services available. If the user then selects a location-dependent service, such as service LDS in Figure 4, the service makes a query to the replicated database RDB, or to the location database in the SDP if a replicated database is not used, to find out the current location of the terminal. The location is found on the basis of the calling number from the database, i.e. the search key is the calling number. The service gets the calling number in the HTTP message from the gateway. Different applications may utilize the location information in various ways.

In some countries legislation stipulates that location information can only be available during the service session of the terminal in question. To this end, it is advantageous to monitor the termination of the call and to delete the database entry when the call is released or disconnected. It is therefore preferable that the SCP commands the SSP to monitor the events indicating that the call is not any more "on", such as "calling party terminates", "called party terminates", and "no connection".

As obvious from the above, the system according to the invention requires a signaling system capable of carrying the location information from the BTS at least up to the SSP exchange. This is fulfilled with the above-mentioned ISUP signaling, for example.

The SDP is here presented as an example of the location of the location database according to the invention. However, it must be understood that the location database may be located also in other physical entities of the Intelligent Network, e.g. in a Service Control Point, in an Adjunct (AD) or in a Service Node (SN), which along with SDP are those physical entities of the Intelligent Network where the SDF (Service Data Function) may be located.

Although the invention was described above with reference to the examples shown in the appended drawings, it is obvious that the invention is not limited to these, but it may be modified by those skilled in the art without departing from the scope and spirit of the invention. Although it is advantageous to make the decision on a query to the Intelligent Network depending on what is the called number, it is possible, in a logical sense, to make the decision based on any other information or set of information belonging to the data of the call attempt, that indicates that the user is likely to initiate a location-dependent service.

## Claims

1. A method for implementing location-dependent services for a mobile terminal in a telecommunications system comprising a cellular network which includes a mobile switching center, the mobile terminal being in wireless communication with said cellular network, the method comprising the steps of
- routing a call attempt originating from said terminal to a mobile switching center, whereby call data is sent to the mobile switching center, the call data including location information indicating the current location of the terminal within the cellular network, and
- routing the call attempt to a gateway through which the services are accessible,
**characterized by**
- routing the call attempt from the mobile switching center via an Intelligent Network to said gateway, whereby said location information is sent to the Intelligent Network,
- storing the location information into a location database by means of the Intelligent Network, and
- assigning the location database to said services, whereby a service can retrieve the location information during a call established through the gateway.

2. A method according to claim 1, **characterized by**
- storing the location information into a first database maintained in the Intelligent Network, and
- copying said first database into said location database.

3. A method according to claim 1, **characterized by** storing the location information into a location database maintained in the Intelligent Network.

4. A method according to claim **1, characterized by** deleting the location information when the call is terminated.

5. A method according to claim 1, **characterized by** using the Global Cell Identity as the location information.

6. A telecommunications system for implementing location-dependent services for a mobile terminal, the telecommunications system comprising
- a cellular network including a mobile switching center, the mobile terminal being in wireless communication with the cellular network,
- first routing means for routing a call attempt originated from said terminal to a mobile switching center, said first routing means being adapted to send call data to the mobile switching center, the call data including location information indicating the current location of the terminal within the cellular network,
- a gateway for receiving said call attempts, the location-dependent services being accessible through said gateway,
**characterized in that** the system further comprises
- second routing means for routing the call attempt from the mobile switching center via an Intelligent Network to said gateway, the second routing means being adapted to send the location information to the Intelligent Network, and
- storage means for storing the location information sent to the Intelligent Network into a location database, the database being assigned to said location-dependent services for retrieving the location information from the database during a call established through said gateway.

7. A system according to claim 6, **characterized in that** the storage means comprise a first database in a network element provided with a Service Data Function, and a location database which is a copy of said first database.

8. A system according to claim 7, **characterized in that** the location database is located outside the Intelligent Network.

9. A system according to claim 6, **characterized in that** the location database is in a network element provided with a Service Data Function.

10. A system according to claim 6, **characterized in that** the second routing means comprise a telephone exchange with a Service Switching Function, the exchange being adapted to send a service request for Intelligent Network services when said call data indicates that the call attempt is destined for said gateway.

11. A system according to claim 7, **characterized in that** the mobile terminal is a WAP-compliant terminal.
